# EUROPÄISCHE PATENTANMELDUNG

(11) **EP 3 840 343 A1**
(43) Veröffentlichungstag der Anmeldung: **23.06.2021**
(21) Anmeldenummer: 20211014.4
(22) Anmeldetag: 01.12.2020
(51) Int. Cl.: H04M 1/04

(54) **FINGERGRIFF FÜR EIN PORTABLES MEDIENWIEDERGABEGERÄT**

(30) Priorität: 18.12.2019 DE 102019220023
(71) Anmelder: Vonmählen GmbH, 21339 Lüneburg (DE)
(72) Erfinder: Thormählen, Julian, 21365 Adendorf (DE)
(74) Vertreter: Müller Verweyen

(57) **Zusammenfassung**

Die Erfindung betrifft einen Fingergriff (100) für ein portables Medienwiedergabegerät mit
-einer Befestigungsplatte (16), wobei
-eine Deckplatte (17) vorgesehen ist, welche über eine elastische Verbindung mit der Befestigungsplatte (16) verbunden ist, wobei
-die elastische Verbindung durch einen die Befestigungsplatte (16) und die Deckplatte (17) umfassenden Elastomerring (5) gebildet ist.

## Beschreibung

Die vorliegende Erfindung betrifft einen Fingergriff für ein portables Medienwiedergabegerät mit den Merkmalen des Oberbegriffs von Schutzanspruch 1.

Portable Medienwiedergabegeräte sind z.B. moderne Mobiltelefone auch Smartphone genannt, tragbare Musik- und Bildwiedergabegeräte oder auch Tabletcomputer. Die portablen Medienwiedergabegeräte weisen ein Gehäuse und ein möglichst großes, sich bevorzugt über die gesamte Oberfläche einer Seite des portablen Medienwiedergabegeräts erstreckendes Display auf. Das Gehäuse bildet den Grundkörper und dient zur Aufnahme der Elektronik und Anschlüsse, wie z.B. Leistungsmodule, Kameras, Mikrophone, Lautsprecher, Tastsensoren und dgl., und ist zu einer Seite durch das Display abgedeckt. Portable Medienwiedergabegeräte sollten dabei möglichst flach bei einem gleichzeitig möglichst großen Display ausgebildet sein. Dies wird dadurch erreicht, indem das Gehäuse mit einem möglichst flachen Hohlraum zur Anordnung der Elektronik ausgebildet ist, und das Display so bemessen ist, dass es die Öffnung des Gehäuses maximal abdeckt. Das Display kann dazu bevorzugt berührungs- und/oder drucksensitiv ausgebildet sein, so dass das Display sowohl zur Wiedergabe von Informationen als auch zur Eingabe von Befehlen oder Daten genutzt werden kann.

Bei der Benutzung des portablen Medienwiedergabegerätes hält die benutzende Person das portable Medienwiedergabegerät derart in der Hand, dass das Display möglichst ganzflächig zu sehen ist. Dies erfolgt dadurch, indem das portable Medienwiedergabegerät bei der Nutzung mit dem Gehäuse in der Hand anliegt und das Display die freie Oberfläche bildet.

Weiter ist es bekannt, die portablen Medienwiedergabegeräte in formkorrespondierende Hüllen (Cover) oder Taschen einzustecken, um sie vor äußeren mechanischen Einwirkungen zu schützen oder ästhetisch entsprechend dem Geschmack des Benutzers zu individualisieren.

Ferner ist es bekannt, die portablen Medienwiedergabegeräte mit Fingergriffen zu versehen, welche entweder direkt an der Außenseite des Gehäuses des portablen Medienwiedergabegerätes oder auch der Hülle bzw. der Tasche des portablen Medienwiedergabegerätes z.B. durch eine Klebeverbindung befestigt werden. Der Fingergriff ist dazu vorgesehen, dass die Person das portable Medienwiedergabegerät durch den Eingriff eines Fingers zusätzlich fixiert. Dazu kann der Fingergriff z.B. eine Befestigungsplatte zur Befestigung an dem portablen Medienwiedergabegerät und einen an der Befestigungsplatte in einem Schwenklager verschwenkbar gehaltenen Ring aufweisen, in welchen die Person den Finger zum Fixieren des portablen Medienwiedergabegerätes einführt. Der Ring ist gegenüber der Befestigungsplatte in einem Schwenklager verschwenkbar ausgebildet, damit er bei einer Nichtbenutzung des portablen Medienwiedergabegeräts z.B. zwecks Einschiebens in eine Tasche aus einer "Aktivstellung" in eine "Passivstellung" zu einer flachen Geometrie an das portable Medienwiedergabegerät herangeklappt werden kann. Zum Eingriff des Fingers wird der Ring aus der Passivstellung in die Aktivstellung verschwenkt, in welcher die Person ergonomisch griffgünstig in den Ring eingreifen kann. Ein Nachteil dieses Fingergriffs ist darin zu sehen, dass der Fingergriff mit dem Ring in der Passivstellung eine unebene Oberfläche bildet, da der Ring selbst und auch das Schwenklager für den Ring von der Oberfläche der Befestigungsplatte vorstehen.

Vor diesem Hintergrund liegt der Erfindung die Aufgabe zugrunde, einen Fingergriff für ein portables Medienwiedergabegerät bereitzustellen, welcher eine verbesserte Funktionalität und außerdem eine möglichst flache und ebene Geometrie in einer Passivstellung aufweisen soll.

Zur Lösung der Aufgabe wird ein Fingergriff mit den Merkmalen von Anspruch 1 vorgeschlagen. Weitere bevorzugte Weiterbildungen sind den Figuren, der zugehörigen Beschreibung und den Unteransprüchen zu entnehmen.

Gemäß dem Grundgedanken der Erfindung wird vorgeschlagen, dass eine Deckplatte vorgesehen ist, welche über eine elastische Verbindung mit der Befestigungsplatte verbunden ist.

Die erfindungsgemäße Lösung basiert damit auf der Grundidee, statt des bisher verwendeten Fingerringes eine Deckplatte vorzusehen, welche über eine elastische Verbindung mit der Befestigungsplatte verbunden ist. Durch die elastische Verbindung wird es ermöglicht, die Deckplatte aus der Passivstellung in der Anlage an der Befestigungsplatte in eine Aktivstellung unter Bildung eines Abstandes zu der Befestigungsplatte anzuheben, so dass der Benutzer mit dem Finger in den zwischen der Deckplatte und der Befestigungsplatte gebildeten Zwischenraum eingreifen kann. Dabei können auch mehrere Finger eingeführt oder der elastische Abschnitt kann auch zwischen zwei Fingern gehalten werden. Wichtig ist nur, dass der gebildete Freiraum derart bemessen ist, dass mindestens ein Finger zwischen der Deckplatte und der Befestigungsplatte eingeführt werden kann, und das portable Medienwiedergabegerät von dem Benutzer zusätzlich über den oder die Finger gehalten werden kann. Die Deckplatte ist flächig ausgebildet und wird durch die elastische Verbindung nach der Verwendung aus der Aktivstellung selbsttätig in die Passivstellung zurückgezogen und gelangt dadurch flächig zur Anlage an der Befestigungsplatte. Da die Deckplatte im Gegensatz zu dem vormals verwendeten Fingerring nicht mehr speziell zum Eingriff für einen Finger ausgebildet werden muss und der Eingriff des Fingers erst durch das Abheben der Deckplatte ermöglicht wird, kann die Deckplatte bewusst mit einer möglichst ebenen und flachen Oberfläche ausgebildet werden, so dass der Fingergriff in der Passivstellung eine homogene ebene Oberfläche aufweist und das Einführen oder Herausziehen des portablen Medienwiedergabegerätes in oder aus einer Tasche wie z.B. Jackentasche oder Hosentasche wesentlich weniger behindert.

Dabei kann die elastische Verbindung bevorzugt durch einen die Befestigungsplatte und die Deckplatte umfassenden Elastomerring gebildet sein. Der Elastomerring umfasst in der Passivstellung des Fingergriffes beide Teile zu einem kompakten Fingergriff an dem portablen Medienwiedergabegerät und ermöglicht aufgrund seiner richtungsunabhängigen Elastizität ein Abheben und eine Bewegung des Deckelteils in verschiedene Richtungen gegenüber der Befestigungsplatte. Dadurch kann der Fingergriff zusätzlich in weitere Positionen z.B. zum Aufstellen des portablen Medienwiedergabegerätes auf einen Untergrund verbracht werden, wodurch die Funktionalität des Fingergriffs gesteigert wird. Außerdem bildet der Elastomerring zusätzlich einen Schutz für die Befestigungsplatte und die Deckplatte an der Radialaußenseite vor äußeren mechanischen Einwirkungen und ist kostengünstig in einer Großserienfertigung z.B. in einem Spritzverfahren auch in einer komplexen Geometrie herstellbar. Ferner liefert der Elastomerring den Vorteil eines haptisch hochwertigen Eindrucks des Fingergriffes und verhindert das Zerkratzen von Oberflächen, wenn das portable Medienwiedergabegerät mit dem Fingergriff z.B. auf einem transparenten Kunststofftisch abgelegt wird.

Weiter wird vorgeschlagen, dass der Elastomerring eine Dicke aufweist, welche mindestens der Summe der Dicken der Befestigungsplatte und der Deckplatte entspricht. Der Elastomerring überdeckt dadurch in der Passivstellung sowohl die Befestigungsplatte als auch die Deckplatte in der Höhe. Im Idealfall entspricht die Dicke des Elastomerringes genau der Summe der Dicken der Befestigungsplatte und der Deckplatte, so dass die drei Teile in der Passivstellung einen kompakten und möglichst ebenen Block bilden.

Gemäß einer weiteren bevorzugten Weiterentwicklung wird vorgeschlagen, dass der Elastomerring in einem ersten Abschnitt mit der Befestigungsplatte, in einem zweiten Abschnitt mit der Deckplatte verbunden ist, und in wenigstens einem dritten Abschnitt, welcher zwischen dem ersten und dem zweiten Abschnitt angeordnet ist, weder mit der Deckplatte noch mit der Befestigungsplatte verbunden ist. Der dritte Abschnitt, in dem der Elastomerring mit keinem der beiden Teile verbunden ist, ermöglicht hier die Beweglichkeit der Deckplatte zu der Befestigungsplatte, während der erste und der zweite Abschnitt zu einer Verbindung des Elastomerringes mit den beiden Teilen dient. Die Bemessung des dritten Abschnittes kann dabei zu einer Auslegung der Höhe genutzt werden, bis zu welcher die Deckplatte gegenüber der Befestigungsplatte abhebbar sein soll. Außerdem wird die Beweglichkeit der Deckplatte zusätzlich natürlich durch die Elastizität des Werkstoffes des Elastomerringes selbst begünstigt.

Weiter wird vorgeschlagen, dass der Elastomerring in Umfangs- und/oder Radialrichtung eine variierende Dicke zur Ausbildung einer Griffmulde aufweist. Durch die variierende Dicke wird bewusst mindestens ein Bereich geschaffen, in welchem der Abstand zwischen dem Elastomerring und der Oberfläche des portablen Medienwiedergabegerätes größer als in dem verbleibenden Bereich des Umfanges ist, so dass der Nutzer die Deckplatte durch Einführen eines oder mehrerer Finger in diesen als Griffmulde gebildeten Abschnitt ergonomisch besonders günstig anheben kann.

Dabei ist die Griffmulde bevorzugt an dem zweiten Abschnitt des Elastomerringes vorgesehen, welcher mit der Deckplatte verbunden ist, so dass der Nutzer die Deckplatte besonders griffgünstig gegenüber der Befestigungsplatte anheben und/oder ankippen kann.

Weiter wird vorgeschlagen, dass die Befestigungsplatte und die Deckplatte eine identische Außenform aufweisen. Die Deckplatte kann dadurch so auf die Befestigungsplatte aufgesetzt werden, dass sie die Befestigungsplatte in der Höhe erhöht, ohne dass an der Radialaußenseite Stufen oder Absätze gebildet werden. Die Deckplatte und die Befestigungsplatte bilden damit einen kompakten Block, wobei die Befestigungsplatte vollständig abgedeckt wird, ohne dass die Deckplatte die Befestigungsplatte radial außen überragt.

Vorzugsweise können die Befestigungsplatte und/oder die Deckplatte zweiteilig aus einem ersten Teil und einem zweiten Teil gebildet sein, so dass sie z.B. zur Aufnahme weiterer Bauteile, wie z.B. Lichtquellen, Sensoren, Display oder dergleichen genutzt werden können.

Insbesondere kann der Elastomerring in diesem Fall mit einem Ansatz zwischen dem ersten Teil und dem zweiten Teil der Befestigungsplatte und/oder der Deckplatte festgelegt sein. Der Elastomerring ist damit mit dem Ansatz zwischen dem ersten und dem zweiten Teil der Befestigungsplatte und/oder der Deckplatte festgelegt.

Weiter wird vorgeschlagen, dass die Deckplatte durch eine Magnetkraft an der Befestigungsplatte fixierbar ist. Durch die Magnetkraft kann eine besonders einfach zu lösende und wiederherzustellende Verbindung realisiert werden, ohne dass eine besondere Formgebung der Befestigungsplatte und/oder der Deckplatte erforderlich ist.

Dabei kann an der Befestigungsplatte und/oder der Deckplatte bevorzugt ein Magnet vorgesehen sein, welcher derart ausgerichtet und angeordnet ist, dass er durch sein Magnetfeld eine Sollposition der Deckplatte zu der Befestigungsplatte definiert. Die Deckplatte wird dadurch bei der Bewegung aus der Aktivstellung also aus der angehobenen Stellung in die Passivstellung also in die anliegende Anordnung zusätzlich gegenüber der Befestigungsplatte ausgerichtet. Dabei kann die Deckplatte sowohl gegenüber der Befestigungsplatte zentriert als auch in der Drehwinkelstellung ausgerichtet werden.

Dabei kann der Magnet bevorzugt zwischen dem ersten Teil und dem zweiten Teil der Befestigungsplatte und/oder der Deckplatte fixiert sein. Dadurch wird der Magnet zu beiden Seiten hin abgedeckt und vor äußeren Einwirkungen geschützt.

Weiter wird vorgeschlagen, dass der Fingergriff eine Basisplatte aufweist, welche an dem portablen Medienwiedergabegerät befestigbar ist, und dass der Fingergriff mit der Befestigungsplatte in einer Rastverbindung an der Basisplatte befestigbar ist. Die Basisplatte dient der Befestigung des Fingergriffs an dem Medienwiedergabegerät und wird selbst z.B. über eine doppelseitige Klebeverbindung an der Außenseite des Gehäuses des portablen Medienwiedergabegerätes befestigt. Die Basisplatte bildet dann in der befestigten Stellung den Befestigungsansatz für den Fingergriff an dem Medienwiedergabegerät. Der Fingergriff wird dann mit dem Befestigungsgriff über eine manuell einfach und insbesondere ohne die Zuhilfenahme von Werkzeug zu realisierende Rastverbindung mit dem Basisteil verbunden. Die Rastverbindung kann dabei insbesondere eine zerstörungsfrei lösbare Verbindung sein, so dass der Fingergriff bis auf die Basisplatte von dem Wiedergabegerät gelöst und anschließend wieder befestigt werden kann.

Dazu kann die Basisplatte bevorzugt eine ringförmige Kante oder einen ringförmigen Wulst aufweisen, welche(r) sich ausgehend von der Basisplatte radial nach außen erweitern, und die Befestigungsplatte kann bevorzugt über die Rastverbindung auf der Kante oder dem Wulst der Basisplatte befestigbar sein. Die Kante bzw. der Wulst bilden damit auf der Basisplatte einen Befestigungsansatz für die Befestigungsplatte und ermöglichen durch ihre sich radial nach außen erweiternde Form ein Hintergreifen der Befestigungsplatte mit einer entsprechenden Formgestaltung zur Verwirklichung der Rastverbindung. Sofern die Kante bzw. der Wulst kreisförmig ausgebildet sind, ermöglichen diese ferner eine Endlosdrehverbindung der Befestigungsplatte gegenüber der Basisplatte um eine zentrisch zu dem kreisförmigen Wulst bzw. zu der kreisförmigen Kante angeordneten Drehachse.

Weiter wird vorgeschlagen, dass die Rastverbindung elastisch ausgebildet ist. Dadurch kann der Verbindungsvorgang selbst vereinfacht werden, und außerdem können die lokalen maximalen Belastungswerte der ineinandergreifenden Teile verringert werden. Unter dem Begriff einer elastischen Rastverbindung soll dabei jede Verbindung verstanden werden, welche durch eine elastische Verformung eines oder mehrerer Teile der Verbindung verwirklicht ist, die zur Verwirklichung der Rastverbindung ineinandergreifen. Dabei ist die Elastizität insbesondere zur Herstellung der Rastverbindung von Vorteil, indem sich ein oder mehrere der zur Realisierung der Rastverbindung ineinandergreifenden Teile der Basisplatte und/oder der Befestigungsplatte bei dem Verbinden verformen können, ohne dabei zerstört zu werden und sich anschließend unter Ausnutzung ihrer Elastizität wieder in die Ursprungsform zurückverformen können.

Weiter wird vorgeschlagen, dass ein Sicherungsteil vorgesehen ist, welches die Rastverbindung zwischen der Befestigungsplatte und der Basisplatte in einer Sicherungsstellung gegen ein unbeabsichtigtes Lösen sichert. Durch das die Rastverbindung in der Befestigungsstellung sichernde Sicherungsteil kann die Rastverbindung selbst für eine einfache Handhabung mit einer kleinere zu überwindenden Kraftschwelle ausgelegt werden, da das unbeabsichtigte Lösen aus der Befestigungsstellung zusätzlich durch das Sicherungsteil verhindert wird. Die Rastverbindung wird durch das Sicherungsteil in der Befestigungsstellung praktisch fixiert.

Weiter wird vorgeschlagen, dass die Basisplatte eine Profiloberfläche aufweist, und die Befestigungsplatte eine zu der Profiloberfläche der Basisplatte als Negativform ausgebildete Oberfläche aufweist, mit der die Befestigungsplatte in einer Befestigungsstellung an der Profiloberfläche der Basisplatte anliegt. Die Basisplatte und die Befestigungsplatte greifen durch die Profiloberfläche und die anliegenden Negativfläche zu einer kompakten Bauform ineinander. Außerdem ist die Befestigungsplatte zusätzlich gegen ein seitliches Verschieben gegenüber der Basisplatte gesichert.

Weiter wird vorgeschlagen, dass die Befestigungsplatte an ihrer freien Oberfläche eine Formgestaltung aufweist, an der die Deckplatte unter Verformung des Elastomerringes in einer angekippten Stellung festlegbar ist. Die Deckplatte kann dadurch gegenüber der Befestigungsplatte angekippt und in der angekippten Stellung fixiert werden. Die Deckplatte bildet dann in der fixierten, angekippten Stellung eine Aufstandsfläche, über welche das Medienwiedergabegerät in einer Stativfunktion gegenüber einer ebenen Grundfläche in eine geneigte Stellung aufgestellt werden kann. Dadurch kann die Erkennbarkeit des Displays aufgrund einer verbesserten Ausrichtung des Medienwiedergabegerätes zu dem Nutzer verbessert werden, ohne dass der Nutzer das Medienwiedergabegerät ständig in der Hand halten muss.

Die Erfindung wird im Folgenden anhand bevorzugter Ausführungsformen unter Bezugnahme auf die beigefügten Figuren erläutert. Dabei zeigen die
Fig. 1 bis 4 den erfindungsgemäßen Fingergriff in der Passiv- und Aktivstellung in verschiedenen Ansichten;
Fig. 5 bis 9 den erfindungsgemäßen Fingergriff in Schnittdarstellung nach verschiedenen Montageschritten, im montierten Zustand sowie in Explosionsdarstellung;
Fig. 10 bis 14 den erfindungsgemäßen Fingergriff in einer weiterentwickelten Ausführungsform in verschiedenen Darstellungen;
Fig. 15 bis 17; ein portables Medienwiedergabegerät mit einem erfindungsgemäßen Fingergriff in verschiedenen Stellungen des Fingergriffs.

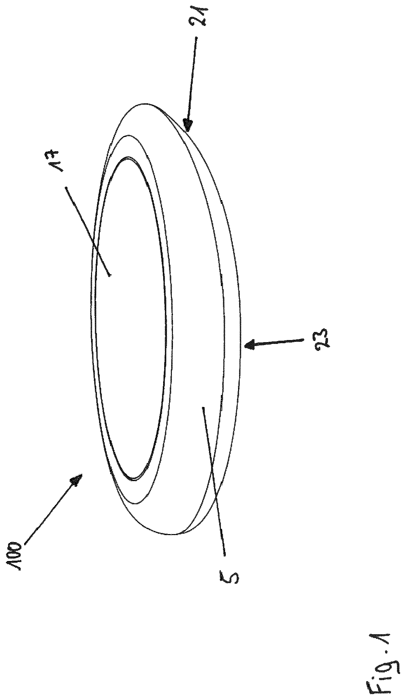

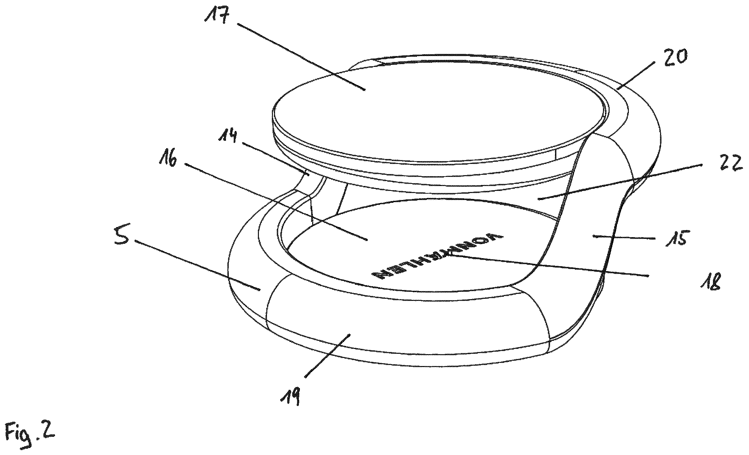

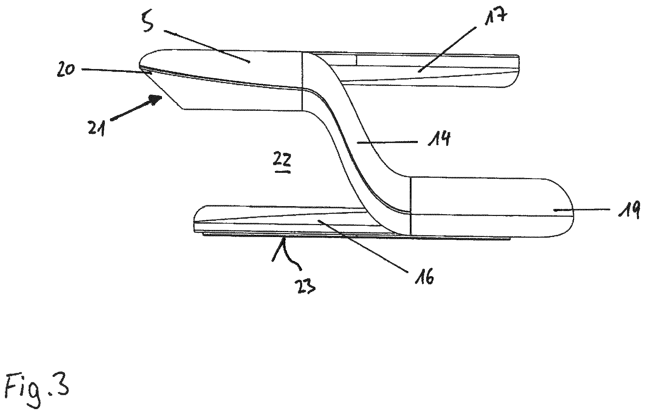

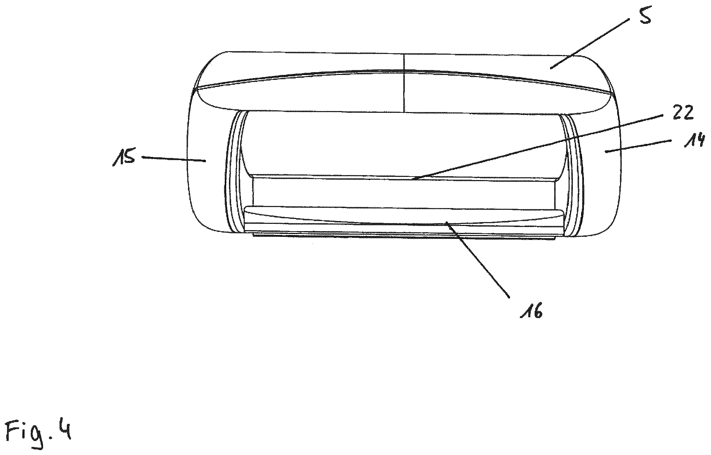

In der Figur 1 ist der erfindungsgemäße Fingergriff 100 zu erkennen, bevor er auf der Außenseite eines Gehäuses eines portablen Medienwiedergabegeräts z.B. durch eine Klebeverbindung befestigt wird. Der Fingergriff 100 umfasst als Grundbauelemente, wie in den Figuren 2 bis 4 zu erkennen ist, eine Befestigungsplatte 16, eine Deckplatte 17 und einen Elastomerring 5 und wird mit einer Unterseite 23 der Befestigungsplatte 16 an dem Gehäuse des portablen Medienwiedergabegeräts oder einer Hülle des portablen Medienwiedergabegeräts befestigt. Die Deckplatte 17 ist in einer Aktivstellung gegenüber der Befestigungsplatte 16 angehoben, so dass zwischen der Deckplatte 17 und der Befestigungsplatte 16 ein Freiraum 22 zum Eingriff eines oder mehrerer Finger des Benutzers gebildet ist.

Der Elastomerring 5 ist, wie nachfolgend noch näher beschrieben wird, mit einem ersten Abschnitt 19 mit der Befestigungsplatte 16 und mit einem zweiten Abschnitt 20 mit der Deckplatte 17 verbunden. Zwischen dem ersten Abschnitt 19 und dem zweiten Abschnitt 20 weist der Elastomerring 5 zwei dritte Abschnitte 14 und 15 auf, in denen der Elastomerring weder mit der Befestigungsplatte 16 noch mit der Deckplatte 17 verbunden ist und dadurch eine Bewegung der Deckplatte 17 zu der Befestigungsplatte 16 ermöglicht. Der Elastomerring 5 ist kreisförmig ausgebildet und umfasst die Befestigungsplatte 16 und die Deckplatte 17 an ihren radial äußeren Rändern. Der Elastomerring 5 ist an seinem radial inneren Rand in der Dicke bzw. Höhe so bemessen, dass die Dicke der Summe der Dicken der Befestigungsplatte 16 und der Deckplatte 17 entspricht. Damit bildet der Elastomerring 5 im Übergang zu den freien Oberflächen der Deckplatte 17 und der Befestigungsplatte 16 eine stufenlose, homogene Oberfläche aus. Ferner ist der Elastomerring 5 in sich elastisch und so bemessen, dass er die Deckplatte 17, für den Fall, dass keine äußere Kraft einwirkt, auf die Befestigungsplatte 16 zu der in der Figur 1 zu erkennenden kompakten Form in eine Passivstellung heranzieht. Die Deckplatte 17 liegt in der Passivstellung flächig auf der Oberseite der Befestigungsplatte 16 an und bildet ihrerseits aufgrund ihrer ebenen Oberfläche eine homogene ebene Oberfläche des Fingergriffs 100 aus. Die Deckplatte 17 und die Befestigungsplatte 16 weisen eine identische, kreisförmige Außenform auf, so dass sie sich in der Passivstellung zu einem Zylinder mit einer der Summe der Dicken der Deckplatte 17 und der Befestigungsplatte 16 entsprechenden Gesamtdicke ergänzen. Die Beweglichkeit der Deckplatte 17 zu der Befestigungsplatte 16 wird neben den elastischen Eigenschaften des Elastomerringes 5 selbst zusätzlich durch die dritten, nicht mit der Befestigungsplatte 16 oder der Deckplatte 17 verbundenen Abschnitten 14 und 15 ermöglicht.

Ferner weist der Elastomerring 5 eine in Umfangsrichtung und in Radialrichtung variierende Dicke auf, welche im Bereich des zweiten Abschnittes 20, welcher mit der Deckplatte 17 verbunden ist, so bemessen ist, dass die Dicke radial unter Bildung einer Schräge nach außen abnimmt, so dass eine Griffmulde 21 oder ein Griffansatz gebildet wird. Der Elastomerring 5 ist damit bewusst asymmetrisch ausgebildet und weist an dem ersten, mit der Befestigungsplatte 16 verbundenen Abschnitt 19 einen andere, insbesondere dickere und wulstartige Querschnittsform auf, während er in dem Bereich des zweiten, mit der Deckplatte 17 verbundenen Abschnitts 20 an der Unterseite eine zur Außenseite hin ansteigende Schräge aufweist. Durch die Schräge wird ein Griffansatz oder eine Griffmulde 21 gebildet, welche das Einführen des Fingers erleichtert und außerdem die Löserichtung der Deckplatte 17 vorgibt. Die Griffmulde 21 ist bewusst an dem zweiten, mit der Deckplatte 17 verbundenen Abschnitt des Elastomerringes 5 vorgesehen, so dass der Benutzer die Deckplatte 17 ergonomisch griffgünstiger anheben kann, indem er mit dem Finger in die Griffmulde 21 unter den Rand des mit der Deckplatte 17 verbundenen zweiten Abschnittes 20 des Elastomerringes 5 eingreift und die Deckplatte 17 über diesen in die in den Figuren 2 bis 4 zu erkennende Aktivstellung anhebt.

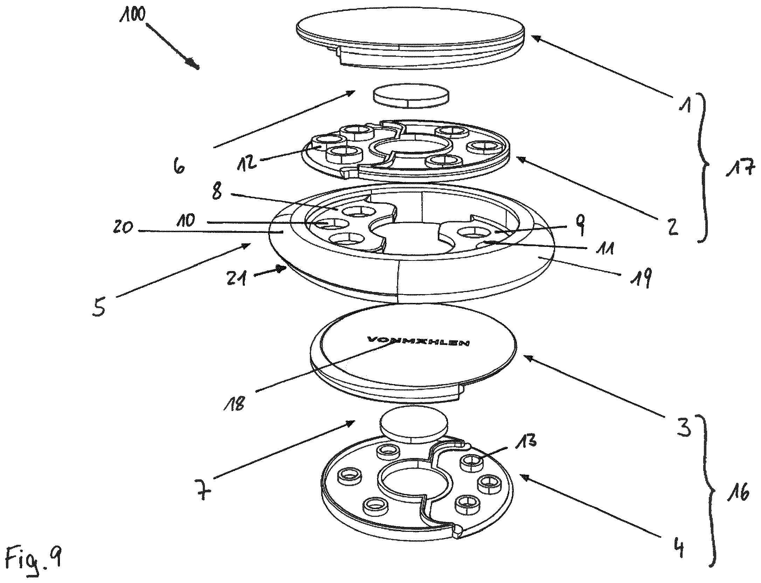

In Figur 9 ist der Fingergriff 100 mit den Einzelteilen in einer Explosionsdarstellung gezeigt. Die Deckplatte 17 und die Befestigungsplatte 16 sind jeweils zweiteilig aus einem ersten Teil 1, 3 und einem zweiten Teil 2, 4 ausgebildet. Das erste und zweite Teil 1, 2, 3, 4 der Deckplatte 17 und der Befestigungsplatte 16 sind jeweils mit einer Profilierung aus verschiedenen Vorsprüngen 12 und 13 versehen, welche unter anderem eine zentrische, kreisförmige Aufnahme zur Aufnahme jeweils eines Magneten 6 und 7 ausbilden.

Der Elastomerring 5 weist zwei radial nach innen gerichtete Ansätze 8 und 9 auf, welche jeweils eine Profilierung aus mehreren kreisförmigen Ausnehmungen 10 und 11 aufweisen. Ferner ist die freie Oberseite des ersten Teils 3 der Befestigungsplatte mit einem Symbol 18 z.B. in Form eines Firmenlogos versehen, welches durch die Anordnung an der Befestigungsplatte 16 in der Passivstellung von der Deckplatte 17 abdeckt wird und erst in der Aktivstellung, d.h. durch das Anheben der Deckplatte 17 sichtbar wird. Das Symbol 18 kann z.B. zu Werbezwecken verwendet werden und kann alternativ oder zusätzlich auch auf der freien Oberfläche der Deckplatte 17 vorgesehen sein. Die Anordnung des Symbols 18 an der Befestigungsplatte 16 hat jedoch den Vorteil eines Überraschungseffektes, da das Symbol 18 erst durch das Anheben der Deckplatte 17 sichtbar wird. Dieser Überraschungseffekt führt zu einer Intensivierung des der Werbewirkung zugrunde liegenden Erinnerungseffektes.

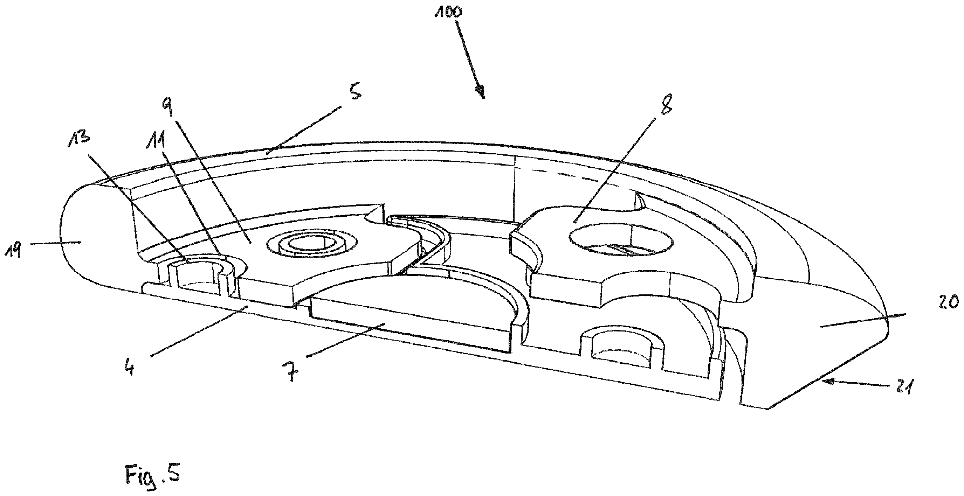

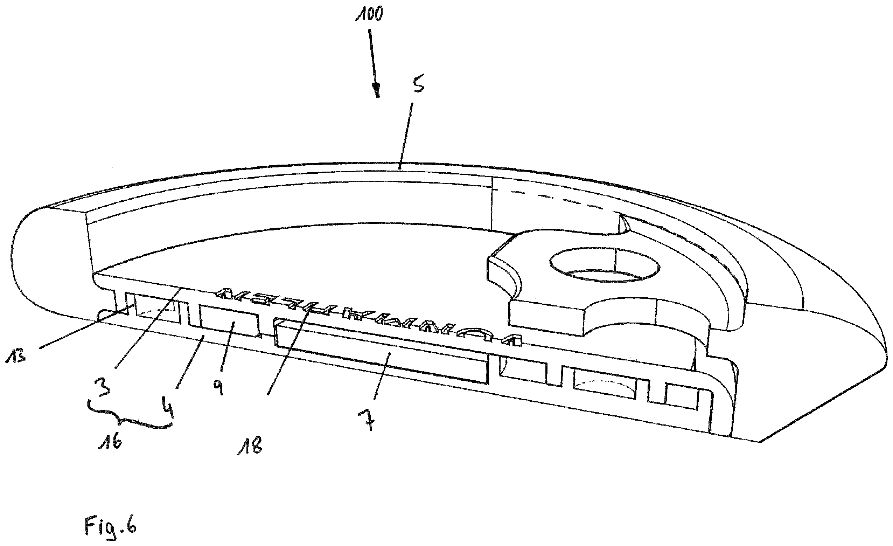

Nachfolgend wird der Fingerring 100 in seinem Aufbau anhand verschiedener in den Figuren 5 bis 8 gezeigter Zwischenschritte der Montage weiter beschrieben. Zur Montage wird zuerst der Magnet 7 in die zentrische Aufnahme des zweiten Teils 4 der Befestigungsplatte 16 eingesetzt. Anschließend wird der Elastomerring 5 mit dem unteren Ansatz 9 auf das zweite Teil 4 aufgesetzt. Dabei wird der Elastomerring 5 so aufgesetzt, dass das zweite Teil 4 mit mehreren ringförmigen Vorsprüngen 13 in die Ausnehmungen 11 des Ansatzes 9 eingreift, so dass der Elastomerring 5 zu dem zweiten Teil 4 in einer definierten Sollposition vorausgerichtet ist. Die ringförmigen Vorsprünge 13 sind in den Außenabmaßen etwas kleiner als die Innendurchmesser der kreisförmigen Ausnehmungen 11 bemessen, so dass zwischen der Innenwandung der Ausnehmungen 11 und der Außenwandung der eingreifenden Vorsprünge 13 ein Ringspalt vorgesehen ist.

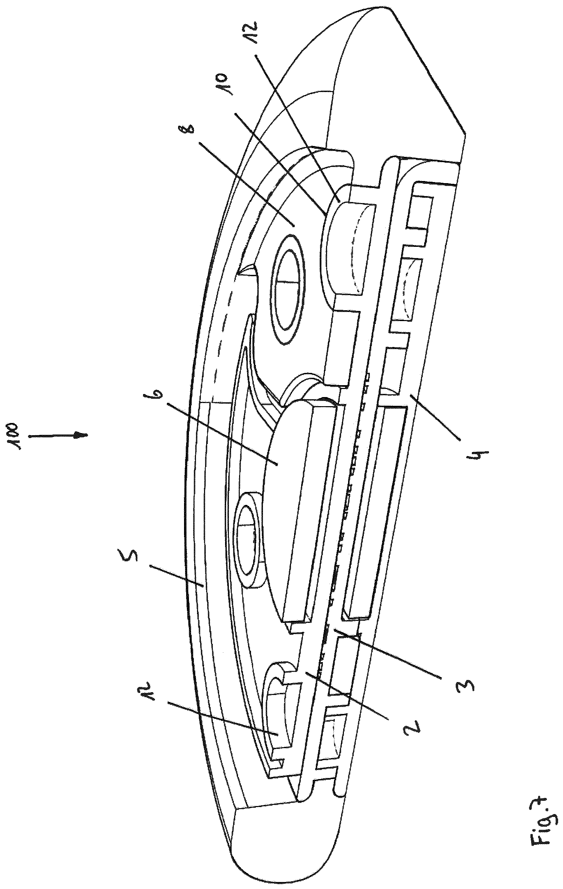

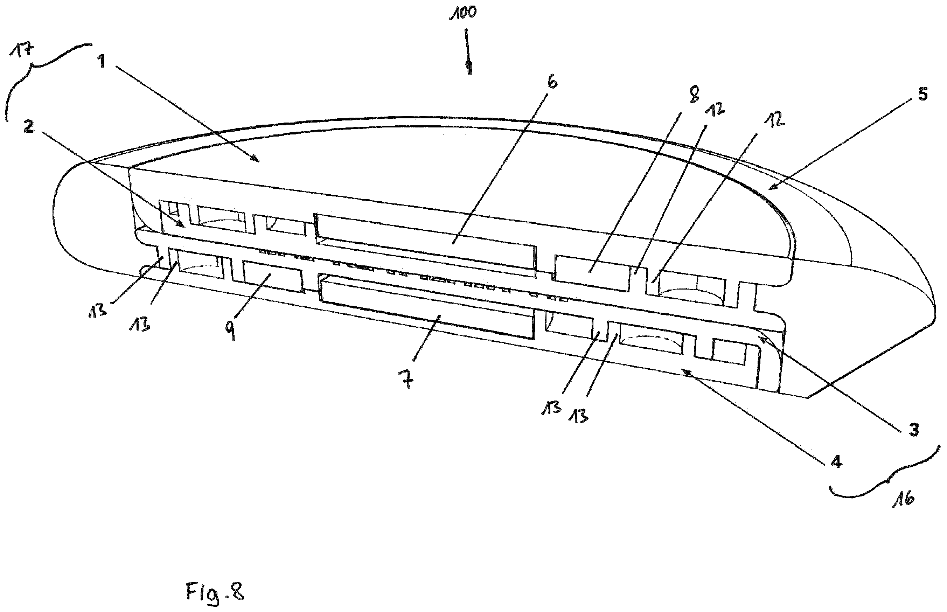

Anschließend wird das erste Teil 3 aufgesetzt und die Befestigungsplatte 16 komplettiert. Dabei weist das erste Teil 3 ebenfalls ringförmige Vorsprünge 13 auf, welche beim Zusammensetzen in die Ringspalte zwischen den Ausnehmungen 11 und den Vorsprüngen 13 des zweiten Teils 4 eingreifen und dadurch letztlich den Ansatz 9 zwischen dem ersten und dem zweiten Teil 3 und 4 fixieren. Ferner bilden die in die Ausnehmungen 11 eingreifenden Vorsprünge 13 eine Formschlussgestaltung, welche den Ansatz 9 gegen ein Abziehen sichert. In einem nächsten Schritt wird das zweite Teil 2 der Deckplatte 17 mit einem bereits in einer zentrischen Aufnahme angeordneten Magneten 6 unter einen zweiten oberen Ansatz 8 des Elastomerringes 5 eingesetzt. Das zweite Teil 2 der Deckplatte 17 weist ebenfalls eine Mehrzahl von ringförmigen Vorsprüngen 12 auf, welche nach dem Einsetzen in jeweils kreisförmige Ausnehmungen 10 des Ansatzes 8 des Elastomerringes 5 eingreifen, wie in der Figur 7 zu erkennen ist. Schließlich wird in einem letzten Montageschritt das erste Teil 1 der Deckplatte 17 aufgesetzt. Dabei wird das erste Teil 1 so aufgesetzt, dass es mit ringförmigen Vorsprüngen 12 in die Freiräume der ringförmigen Vorsprünge 12 des zweiten Teils 2 eingreift, wie in der Figur 8 zu erkennen ist. Damit ist der obere Ansatz 8 zwischen dem ersten und zweiten Teil 1 und 2 der Deckplatte 17 festgelegt und formschlüssig gegen ein Abziehen gesichert.

Damit sind die Befestigungsplatte 16 und die Deckplatte 17 nicht unmittelbar miteinander verbunden. Die Verbindung wird erst durch den beide Teile umfassenden Elastomerring 5 gebildet, welcher mit jeweils einem Ansatz 9 mit der Befestigungsplatte 16 und einem Ansatz 8 mit der Deckplatte 17 verbunden ist. Da der Elastomerring 5 aufgrund seines Werkstoffes in sich elastisch und darüber hinaus in den dritten Abschnitten 14 und 15 mit keinem der beiden Teile verbunden ist, kann die Deckplatte 17 gegenüber der Befestigungsplatte 16 zur Bildung des Freiraumes 22 aus der Passivstellung in die Aktivstellung angehoben werden, wie dies in den Figuren 2 bis 3 zu erkennen ist. Dabei kann der Elastomerring 5 auch in sich gedehnt werden, so dass der eingeführte Finger praktisch in dem Freiraum 22 eingeklemmt wird. Ferner kann die Deckplatte 17 durch die dritten, nicht verbundenen Abschnitte 14 und 15 auch weiter gegenüber der Befestigungsplatte 16 verschwenkt werden, um eine Stützfläche für das portable Medienwiedergabegerät auf einem Untergrund wie z.B. einer Tischplatte zu bilden. Dabei ist es von besonderem Vorteil, dass die Deckplatte 17 über einen Elastomerring 5 mit der Befestigungsplatte 16 verbunden ist, da der Elastomerring 5 zusätzlich eine rutschfeste Abstützung auf einer glatten Oberfläche bildet. Ferner können durch die Verwendung des Elastomerringes 5 die von dem Untergrund auf das portable Medienwiedergabegerät übertragbaren Schwingungen und Stöße gedämpft und reduziert werden.

Der Fingergriff 100 kann je nach der bevorzugten Handhabung des portablen Medienwiedergabegeräts durch die Person in unterschiedlichen Ausrichtungen auf die freie Oberfläche des Gehäuses des portablen Medienwiedergabegeräts oder der Hülle aufgeklebt oder anderweitig befestigt werden. So kann der Fingerring 100 z.B. so befestigt werden, dass die Deckplatte 17 durch eine Bewegung des Fingers in Längsrichtung des portablen Medienwiedergabegeräts unter die Griffmulde 21 angehoben wird, und der Finger anschließend in Längsrichtung des portablen Medienwiedergabegeräts in den gebildeten Freiraum 22 eingeführt wird. Alternativ kann der Fingergriff 100 auch so angebracht werden, dass die Griffmulde 21 einer der längeren Randseiten des portablen Medienwiedergabegeräts zugewandt ist. In diesem Fall hebt der Benutzer die Deckplatte 17 an, indem er mit dem Finger quer zu der Längsrichtung des portablen Medienwiedergabegeräts unter die Griffmulde 21 greift und die Deckplatte 17 anhebt, um nachfolgend mit dem Finger quer zu der Längsrichtung des portablen Medienwiedergabegeräts in den gebildeten Freiraum 22 einzugreifen. Letztlich bleibt es aber dem Benutzer vorbehalten, die Ausrichtung des Fingergriffs 100 an dem portablen Medienwiedergabegerät oder der Hülle individuell zu wählen.

Die Deckplatte 17 ist in der Passivstellung durch die Magnete 6 und 7 an der Befestigungsplatte 16 gehalten. Zum Lösen der Deckplatte 17 reicht es aus, dass die Magnetkraft und ggf. die Federkraft des Elastomerringes 5 überwunden wird, während zur Fixierung der Deckplatte 17 in der Passivstellung allein die Anlage an der Befestigungsplatte 16 ausreicht. Die Magnete 6 und 7 sind in dem vorgeschlagenen Ausführungsbeispiel zentrisch an der Deckplatte 17 und der Befestigungsplatte 16 gehalten und erzeugen dadurch ein gerichtetes Magnetfeld, welches die Deckplatte 17 zusätzlich zu der Federkraft des Elastomerringes 5 in eine zentrische Stellung zu der Befestigungsplatte 16 drängt. Außerdem kann das Magnetfeld zusätzlich so gerichtet sein, dass die Deckplatte 17 außerdem in eine definierte Drehwinkelstellung zu der Befestigungsplatte 16 gedrängt wird.

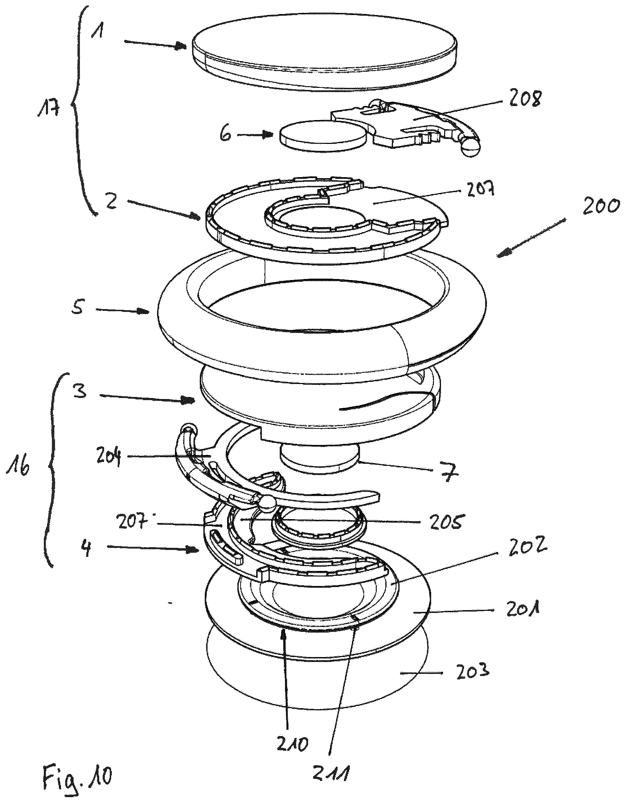

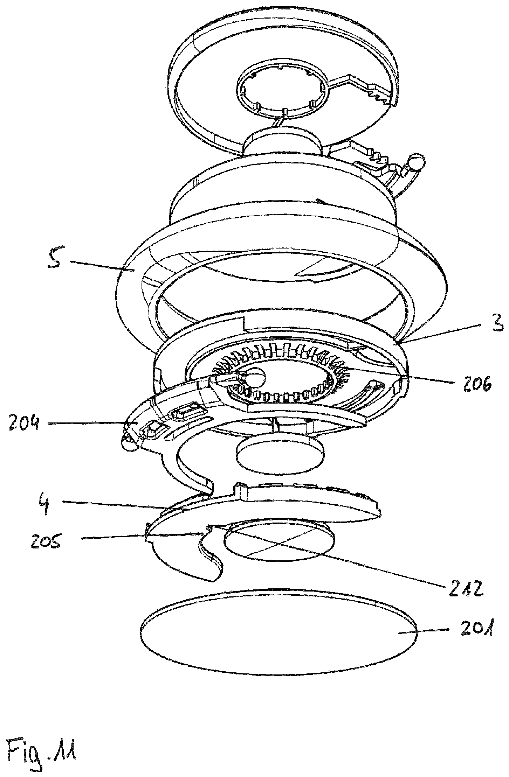

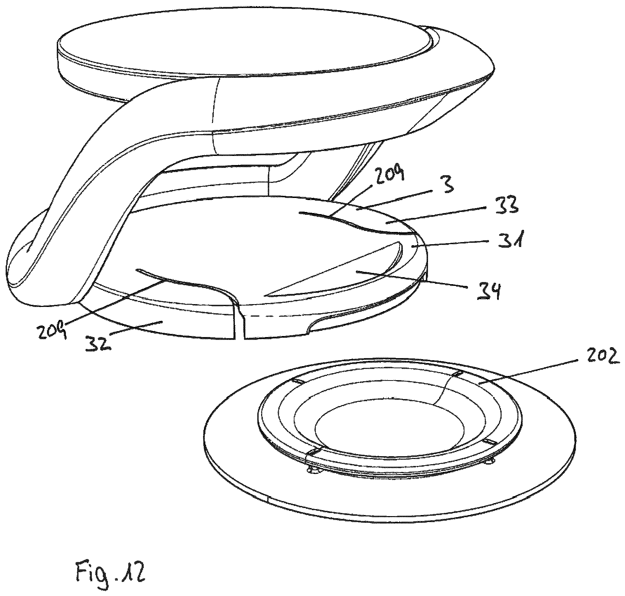

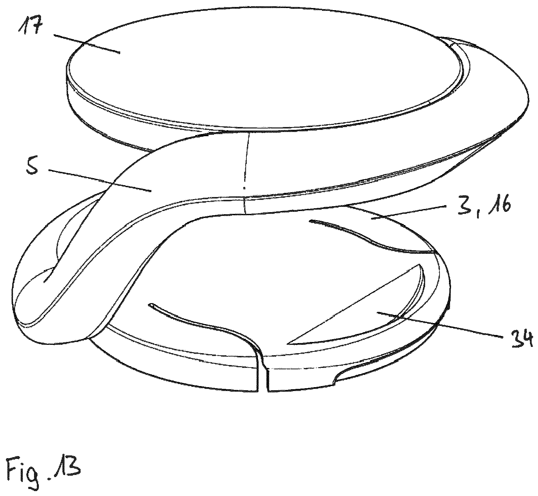

In den Figuren 10 bis 14 ist der Fingergriff 100 nach einem zweiten Ausführungsbeispiel zu erkennen, bei dem die Deckplatte 17 und die Befestigungsplatte 16 nach demselben Prinzip über einen Elastomerring 5 miteinander verbunden sind.

Die Befestigungsplatte 16 ist hier über eine zusätzliche Basisplatte 201 an dem Wiedergabegerät gehalten, welche z.B. selbst über ein doppelseitiges Klebeelement 203 an der Außenseite eines portablen Medienwiedergabegerätes befestigt werden kann. Die Befestigungsplatte 16 wird, wie nachfolgend noch näher erläutert wird, über die Basisplatte 201 an dem portablen Medienwiedergabegerät gehalten und dient selbst zur Halterung des Elastomerringes 5, wie dies bereits zu dem ersten Ausführungsbeispiel beschrieben wurde.

Die Basisplatte 201 weist einen ringförmigen Wulst 202 auf, welcher sich von einer Stirnfläche der Basisplatte 201 erstreckt und sich trichterförmig mit zunehmendem Abstand von der Basisplatte 201 radial nach außen erweitert. Dadurch wird an der Radialaußenseite des ringförmigen Wulstes 202 eine ringförmige Nut 210 gebildet. Statt des Wulstes 202 kann auch eine ring- oder teilringförmige Kante vorgesehen sein, welche sich radial und /oder konisch nach außen erstreckt. Zur Vereinfachung wird nachfolgend der Begriff Wulst 202 verwendet. Es sind unter dem Begriff der Wulst 202 aber auch alle Formgestaltungen zu verstehen, welche durch eine radiale Erstreckung eine Nut zu der Oberfläche der Basisplatte 201 bilden.

Die Deckplatte 17 und die Befestigungsplatte 16 sind auch hier jeweils aus zwei Teilen 1,3 und 2,4 ausgebildet, wobei jeweils zwischen einem ersten Teil 1,3 und einem zweiten Teil 2,4 ein Klemmteil 208,204 gehalten ist, welche sich an der Innenseite des Elastomerringes 5 unter Ausnutzung der Elastizität des Elastomerringes 5 klemmartig abstützen und dadurch die Deckplatte 17 bzw. die Befestigungsplatte 16 jeweils mit einem Abschnitt des Elastomerringes 5 klemmartig verbindet. Damit sind die Deckplatte 17 und die Befestigungsplatte 16 über den Elastomerring 5 elastisch miteinander verbunden. Dabei können in dem Elastomerring 5 zusätzliche Ausnehmungen vorgesehen sein, in welche die Klemmteile 204 und 208 eingreifen, wodurch die Verbindung weiter verfestigt werden kann. Die Klemmteile 204, 208 werden in formkorrespondierende Ausnehmungen 207 des jeweils zweiten Teils 2 und 4 der Deckplatte 17 bzw. der Befestigungsplatte 16 eingelegt und durch Ansetzen des jeweils ersten Teils 1, 3 in den Ausnehmungen 207 fixiert. Die Klemmteile 204 und 208 sind damit jeweils zwischen dem ersten Teil 1,3 und dem zweiten Teil 2,4 der Deckplatte 17 bzw. der Befestigungsplatte 16 eingeklemmt.

Das zweite Teil 4 der Befestigungsplatte 16 ist teilringförmig ausgebildet und weist an seiner radial inneren Seite zwei radial nach innen vorstehende Lippen 205 auf, welche so geformt und angeordnet sind, dass zwischen den Lippen 205 und dem ersten Teil 3 der Befestigungsplatte 16 ein teilringförmiger Spalt gebildet ist.

Das erste Teil 3 der Befestigungsplatte umfasst ferner ein Sicherungsteil 31 in Form einer elastischen, von dem ersten Teil 3 abhebbaren Klappe, welche zwischen zwei elastischen Armen 32,33 des ersten Teils 3 angeordnet ist und durch zwei sich bis in etwa die Mitte des ersten Teils 3 erstreckende Schlitze 209 in dem ersten Teil 3 beweglich ausgebildet ist. Das erste Teil 3 weist ferner in der Oberfläche der Klappe eine Formgestaltung 34 in Form einer kreissegmentförmigen Vertiefung mit einer schrägen, sich zu der Randseite des ersten Teils 3 vertiefenden Grundfläche auf.

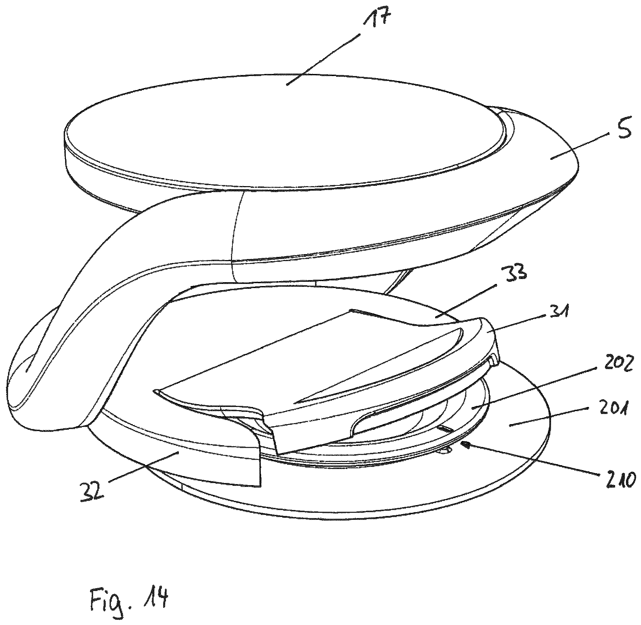

Zur Befestigung des Fingergriffs 100 wird zuerst die Basisplatte 201 mit der flachen Stirnfläche, welche der Stirnfläche mit dem Wulst 202 gegenüberliegt, an der Außenseite, bevorzugt an der Rückseite des portablen Medienwiedergabegerätes z.B. mit dem doppelseitigen Klebeelement 203 befestigt. Anschließend wird der Fingergriff 100, wie in der Figur 14 zu erkennen ist, mit der Befestigungsplatte 16 seitlich aufgeschoben. Dazu wird zuerst das Sicherungsteil 31 also die Klappe unter Ausnutzung ihrer Elastizität angehoben, so dass eine freie seitliche Öffnung an der Befestigungsplatte 16 gebildet wird. Der Fingergriff 100 wird mit dieser freien seitlichen Öffnung seitlich auf den Wulst 202 der Basisplatte 201 aufgeschoben, so dass der ringförmige Wulst 202 zwischen den elastischen Armen 32 und 33 zu liegen kommt und die elastischen Arme 32 und 33 bei der weiteren Einführbewegung elastisch nach außen verformt. Dabei gelangt der Wulst 202 in den teilringförmigen Spalt zwischen den Lippen 205 dem ersten Teil 3 der Befestigungsplatte 16 oder anders ausgedrückt, die teilringförmigen Lippen 205 werden in die Nut zwischen dem Wulst 202 und der Basisplatte 201 eingeführt. Nachdem der Fingergriff 100 mit dem Befestigungsteil 16 bis in die abschließende Befestigungsstellung aufgeschoben wurde, wird das Sicherungsteil 31 wieder zurück in seine sichernde Stellung verbracht, in diesem Fall also die Klappe wieder soweit heruntergeschwenkt, dass die seitliche Öffnung in dem Befestigungsteil 16 wieder verschlossen ist, und der Fingergriff 100 nicht seitlich von dem Wulst 202 der Basisplatte 201 abrutschen kann.

Die Nut zwischen dem Wulst 202 und der Basisplatte 201 ist durch vier in einem Winkel von 90 Grad zueinander angeordnete Stege 211 unterbrochen, welche vorbestimmte Ausrichtungen des Fingergriffs 100 zu der Basisplatte 201 vorgeben. Ferner ist die Lippe 205 durch eine Ausnehmung 212 unterbrochen, welche die Lippe 205 in zwei identische, symmetrisch zu der Mittellinie ausgebildete Teillippen unterteilt. Ferner sind Lippe 205 und die Ausnehmung 212 so geformt und angeordnet, dass die Ausnehmung 212 mittig zu der Klappe und der beim Abheben der Klappe gebildeten seitlichen Öffnung an dem Befestigungsteil angeordnet ist. Der Fingergriff 100 kann nur dann bis in die abschließende Befestigungsstellung aufgeschoben werden, wenn die Befestigungsplatte 16 mit dem zweiten Teil 4 so ausgerichtet ist, dass die Lippe 205 mit der Ausnehmung 212 über eine der Stege 211 geschoben wird. Die Stege 211 bilden dann durch einen formschlüssigen Eingriff in die Ausnehmung 212 eine Verdrehsicherung des Fingergriffs 100 in Umfangsrichtung. Sofern bewusst eine Verdrehbarkeit des Fingergriffs 100 gegenüber der Basisplatte 201 vorgesehen sein soll, können die Stege 211 aber auch weggelassen werden. In diesem Fall ist zur Verwirklichung einer Endlosdrehverbindung eine formschlüssige Verbindung des Fingergriffs 100 zu der Basisplatte 201 in Umfangsrichtung zu vermeiden. Sofern eine nur begrenzte Verdrehbarkeit vorgesehen sein soll, kann diese durch entsprechende Anschläge in der Nut oder an der Basisplatte 201 verwirklicht sein.

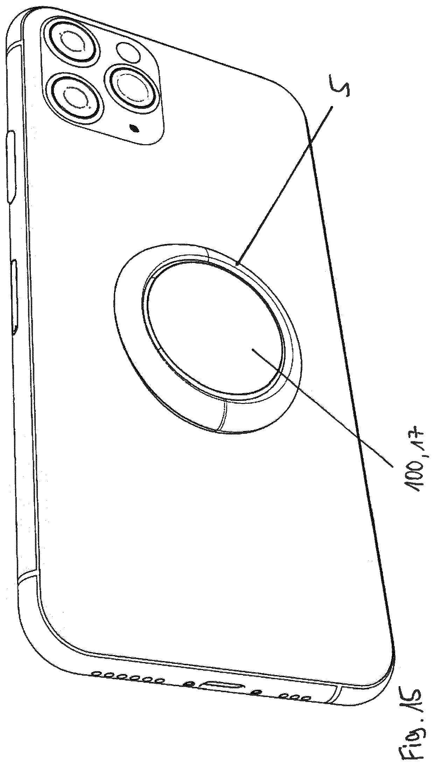

In den Figuren 15 bis 17 sind die verschiedenen Stellungen des Fingergriffs 100 an einem portablen Medienwiedergabegerät wie hier einem Smartphone dargestellt. In der Figur 15 ist der Fingergriff 100 in der Nichtbenutzungsstellung zu erkennen. Die Deckplatte 17 liegt an der nicht zu erkennenden Befestigungsplatte 16 an und der Elastomerring 5 ist entspannt. Der Fingergriff 100 weist einen sehr flachen Aufbau auf. Der Elastomerring 5 weist eine zur Mitte des Fingergriffs 100 hin zunehmende Dicke auf, so dass er die Ecke zwischen dem Verbund aus der Deckplatte 17 und der Befestigungsplatte 16 zu der Oberfläche des Smartphones zu einer Schrägen ausfüllt. Damit kann der Übergang von dem Fingergriff 100 zu der Gehäuseoberfläche des Smartphones zu einer Schrägen ergänzt werden, welche das Einführen des Smartphones in Taschen erleichtert bzw. verhindert, dass das Smartphone mit der ansonsten vorhandenen Körperkante des Fingergriffs 100 an einer Gegenkante hängenbleibt.

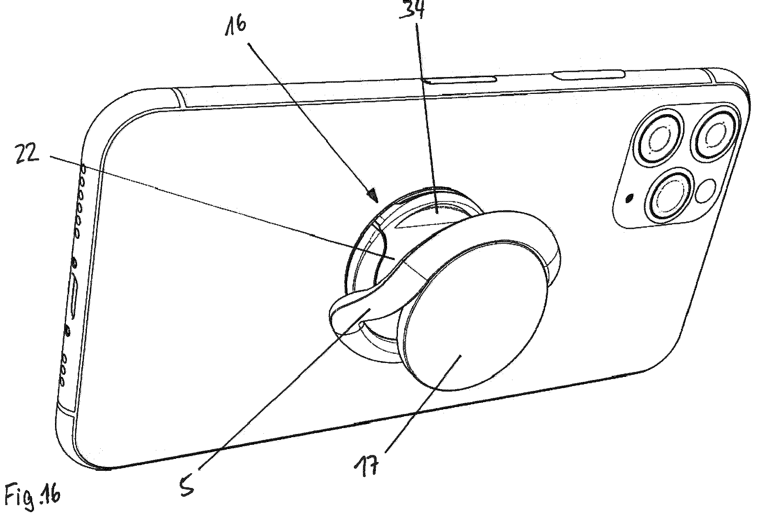

In der Figur 16 ist der Fingergriff 100 mit einer von der Befestigungsplatte 16 abgehobenen Deckplatte 17 zu erkennen, so dass zwischen der Deckplatte 17 und der Befestigungsplatte 16 ein Freiraum 22 zum Eingriff eines oder mehrerer Finger gebildet ist. Dazu wurde der Elastomerring 5 gespannt, so dass er weiterhin eine Spannkraft auf die Deckplatte 17 in Richtung der Befestigungsplatte 16 ausübt. Dadurch kann der Finger in dem Freiraum 22 eingeklemmt werden und die handhabende Person muss ansonsten keine weitere Haltekraft ausüben. Ferner kann das Smartphone dadurch auch durch Aufschieben des Smartphones mit dem Freiraum 22 auf einem externen Gegenstand fixiert werden, soweit die Weite des Freiraumes 22 auf Aufschieben auf den externen Gegenstand zulässt.

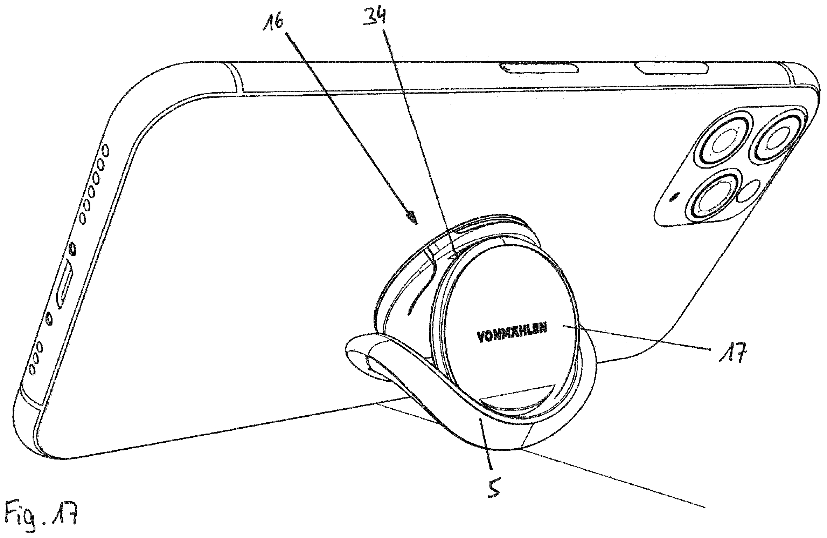

In der Figur 17 ist das Smartphone mit dem als Stativ verwendeten Fingergriff 100 zu erkennen. Die Deckplatte 17 ist von der Befestigungsplatte 16 unter Spannung des Elastomerringes 5 angehoben, und die Deckplatte 17 wurde zusätzlich soweit verdreht, dass die vormals der Befestigungsplatte 16 zugewandte Innenseite zur Außenseite hin gewandt ist. Dazu wurde der Elastomerring 5 soweit verdreht, dass der Abschnitt des Elastomerringes 5, der mit der Deckplatte 17 verbunden ist, auf derselben Seite wie der Abschnitt des Elastomerringes 5 angeordnet ist, der mit der Befestigungsplatte 16 verbunden ist. Gleichzeitig ist der freie Rand der Deckplatte 17 auf die Seite der Befestigungsplatte 16 verdreht, auf der die Formgestaltung 34 in Form der Vertiefung in der Oberfläche des ersten Teils 3 der Befestigungsplatte 16 angeordnet ist. Die Deckplatte 17 ist mit dem freien Rand in die Vertiefung eingeführt und stützt sich darüber auf dem Grund gegen ein Abrutschen ab. Damit kann das Smartphone in eine verbesserte Sichtstellung aufgestellt werden, wobei der Elastomerring 5 mit dem mit der Deckplatte 17 verbundenen Abschnitt gleichzeitig eine elastische Aufstandsfläche für das Smartphone gebildet wird. Dadurch kann das Smartphone selbst und auch die Untergrundfläche vor mechanischen Einwirkungen geschützt werden. Die Formgestaltung 34 ist hier bewusst als eine Vertiefung mit einer schrägen Grundfläche ausgebildet, deren Tiefe zu der Außenseite des ersten Teils 3 der Befestigungsplatte 16 zunimmt. Dadurch kann die aufgestellte schräg zu dem ersten Teil 3 ausgerichtete Deckplatte 17 möglichst ganzflächig in der Vertiefung anliegen und sich darin abstützten. Die Vertiefung gibt praktisch durch ihre Formgebung die Winkelstellung der Deckplatte 17 zu dem ersten Teil 3 in der aufgestellten Stellung vor.

Ferner bildet der trichterförmige Wulst 202 eine Profiloberfläche der Basisplatte 201. Die Befestigungsplatte 16 weist an dem ersten Teil 3 eine dazu formkorrespondierende Negativfläche in Form einer zentrisch angeordneten ringförmigen Erhebung 206 mit einer Vielzahl von außenseitig angeordneten Rippen auf. Die Rippen weisen jeweils eine Krümmung bzw. Schräge auf, welche sich zu einer gekrümmten bzw. schrägen ringförmigen Mantelfläche ergänzen, deren Krümmung bzw. Schräge ein Negativ der Krümmung bzw. Schräge der Innenseite des Wulstes 202 ist. Dadurch gelangt das erste Teil 3 der Befestigungsplatte 16 in der befestigten Stellung zu einer möglichst großflächigen Anlage an der Innenseite des Wulstes 202 und wird darüber gegenüber der Basisplatte 201 gleichzeitig zentriert.

## Patentansprüche

1. Fingergriff (100) für ein portables Medienwiedergabegerät mit
- einer Befestigungsplatte (16), wobei
- eine Deckplatte (17) vorgesehen ist, welche über eine elastische Verbindung mit der Befestigungsplatte (16) verbunden ist, **dadurch gekennzeichnet, dass**
- die elastische Verbindung durch einen die Befestigungsplatte (16) und die Deckplatte (17) umfassenden Elastomerring (5) gebildet ist.

2. Fingergriff (100) nach Anspruch 1, **dadurch gekennzeichnet, dass**
- der Elastomerring (5) eine Dicke aufweist, welche mindestens der Summe der Dicken der Befestigungsplatte (16) und der Deckplatte (17) entspricht.

3. Fingergriff (100) nach einem der Ansprüche 1 oder 2,
**dadurch gekennzeichnet, dass**
- der Elastomerring (5) in einem ersten Abschnitt (19) mit der Befestigungsplatte (16), in einem zweiten Abschnitt (20) mit der Deckplatte (17) verbunden ist, und in wenigstens einem dritten Abschnitt (14,15), welcher zwischen dem ersten und dem zweiten Abschnitt (16,20) angeordnet ist, weder mit der Deckplatte (17) noch mit der Befestigungsplatte (16) verbunden ist.

4. Fingergriff (100) nach einem der Ansprüche 1 bis 3,
**dadurch gekennzeichnet, dass**
- der Elastomerring (5) in Umfangs- und/oder Radialrichtung eine variierende Dicke zur Ausbildung einer Griffmulde (21) aufweist.

5. Fingergriff nach Anspruch 3 und 4, **dadurch gekennzeichnet, dass**
- die Griffmulde (21) in dem zweiten Abschnitt (20) des Elastomerringes (5) vorgesehen ist.

6. Fingergriff (100) nach einem der vorangegangenen Ansprüche, **dadurch gekennzeichnet, dass**
- die Befestigungsplatte (16) und die Deckplatte (17) eine identische Außenform aufweisen.

7. Fingergriff (100) nach einem der vorangegangenen Ansprüche, **dadurch gekennzeichnet, dass**
- die Befestigungsplatte (16) und/oder die Deckplatte (17) zweiteilig aus einem ersten Teil (1,3) und einem zweiten Teil (2,4) gebildet sind.

8. Fingergriff (100) nach Anspruch 7, **dadurch gekennzeichnet, dass**
- der Elastomerring (5) mit einem Ansatz (8,9) zwischen dem ersten Teil (1,3) und dem zweiten Teil (2,4) der Befestigungsplatte (16) und/oder der Deckplatte (17) festgelegt ist, wobei vorteilhaft
- der Elastomerring (5) mit dem Ansatz (8,9) über eine Formschlussgestaltung gegen ein Abziehen von dem ersten und/oder zweiten Teil (1,2,3,4) der Befestigungsplatte (16) und/oder der Deckplatte (17) gesichert ist.

9. Fingergriff (100) nach einem der vorangegangenen Ansprüche, **dadurch gekennzeichnet, dass**
- die Deckplatte (17) durch eine Magnetkraft an der Befestigungsplatte (16) fixierbar ist.

10. Fingergriff (100) nach Anspruch 9, **dadurch gekennzeichnet, dass**
- an der Befestigungsplatte (16) und/oder der Deckplatte (17) ein Magnet (6,7) vorgesehen ist, welcher derart ausgerichtet und angeordnet ist, dass er durch sein Magnetfeld eine Sollposition der Deckplatte (17) zu der Befestigungsplatte (16) definiert.

11. Fingergriff (100) nach Anspruch 10 und nach einem der Ansprüche 7 oder 8, **dadurch gekennzeichnet, dass**
- der Magnet (6,7) zwischen dem ersten Teil (1,3) und dem zweiten Teil (2,4) der Befestigungsplatte (16) und/oder der Deckplatte (17) fixiert ist.

12. Fingergriff (100) nach einem der vorangegangenen Ansprüche, **dadurch gekennzeichnet, dass**
- der Fingergriff (100) eine Basisplatte (201) aufweist, welche an dem portablen Medienwiedergabegerät befestigbar ist, und
- dass der Fingergriff (100) mit der Befestigungsplatte (16) in einer, insbesondere elastisch ausgebildeten, Rastverbindung an der Basisplatte (201) befestigbar ist, wobei vorteilhaft
- die Basisplatte (201) einen ringförmigen Wulst (202) oder eine ringförmige Kante aufweist, welche sich ausgehend von der Basisplatte (201) radial nach außen erweitern, und
- die Befestigungsplatte (16) über die Rastverbindung auf dem Wulst(202) oder der Kante der Basisplatte (201) befestigbar ist.

13. Fingergriff (100) nach Anspruch 12, **dadurch gekennzeichnet, dass**
- ein Sicherungsteil (34) vorgesehen ist, welches die Rastverbindung zwischen der Befestigungsplatte (16) und der Basisplatte (201) in einer Sicherungsstellung gegen ein unbeabsichtigtes Lösen sichert.

14. Fingergriff (100) nach einem der Ansprüche 12 oder 13,
**dadurch gekennzeichnet, dass**
- die Basisplatte (201) eine Profiloberfläche aufweist, und
- die Befestigungsplatte (16) eine zu der Profiloberfläche der Basisplatte (201) als Negativform ausgebildete Oberfläche aufweist, mit der die Befestigungsplatte (16) in einer Befestigungsstellung an der Profiloberfläche der Basisplatte (201) anliegt.

15. Fingergriff (100) nach einem der vorangegangenen Ansprüche, **dadurch gekennzeichnet, dass**
- die Befestigungsplatte (16) an ihrer freien Oberfläche eine Formgestaltung (34) aufweist, an der die Deckplatte (17) unter Verformung des Elastomerringes (5) in einer angekippten Stellung festlegbar ist.
